# EUROPÄISCHE PATENTSCHRIFT

(11) **EP 0 995 357 B1**
(45) Veröffentlichungstag und Bekanntmachung des Hinweises auf die Patenterteilung: **04.09.2002**
(21) Anmeldenummer: 99116371.8
(22) Anmeldetag: 19.08.1999
(51) Int. Cl.: A01K 97/12

(54) **Bissanzeiger**
Bite indicator
Dédecteur de touches et prises de poissons

(30) Priorität: 21.09.1998 DE 19843144
(43) Veröffentlichungstag der Anmeldung: 26.04.2000
(73) Patentinhaber: Bruno Gelle GmbH, 88329 Wangen (DE)
(72) Erfinder: Gelle, Manfred, 88329 Wangen (DE)
(74) Vertreter: Strasser, Wolfgang, Dipl.-Phys

(56) Entgegenhaltungen:
- EP-A- 0 325 444
- DE-A- 2 342 320
- DE-A- 3 200 728
- FR-A- 2 472 916
- GB-A- 2 244 195
- GB-A- 2 259 434
- GB-A- 2 289 603
- US-A- 4 731 946
- US-A- 5 010 678

## Beschreibung

Die Erfindung betrifft einen elektrischen Bißanzeiger für eine Angelrute gemäß dem Oberbegriff von Anspruch 1.

Bißanzeiger sind für das Angeln bei Nacht bestimmt. Bei geschlossenem Rollenbügel soll zuverlässig das Zupfen und/oder Anbeißen eines Fisches am ausgeworfenen Köder angezeigt werden.

Aus der DE-OS 32 00 728 ist ein auf die Spitze einer Angelrute aufsteckbarer elektrischer Bißanzeiger bekannt, der zwei als Stromquelle dienende, in Reihe angeordnete Batterien, eine Leuchtdiode und einen den Stromkreis zwischen den Batterien und der Leuchtdiode unterbrechenden bzw. schließenden, im Ruhezustand offenen Schalter umfaßt, der dadurch geschossen werden kann, daß auf die Angelschnur, die durch einen mit dem Schalter verbundenen Ring geführt ist, ein gewisser Zug ausgeübt wird. Diese Anordnung weist jedoch den Nachteil auf, daß insbesondere beim Fischen in fließenden Gewässem häufig Algen oder andere schwimmende Gegenstände in die Angelleine treiben und auf diese einen Zug ausüben, der einen Biß vortäuscht.

Dieses Problem soll durch einen in der DE-OS 23 42 320 beschrieben elektrischen Bißanzeiger behoben werden, von dem der Oberbegriff des Anspruches 1 ausgeht. Bei dieser bekannten Vorrichtung sind die Anzeigeeinrichtung, die von einem Glühlämpchen gebildet wird, das zusammen mit der Fassung, in die es eingeschraubt ist, gleichzeitig auch als beweglich gelagerter Körper des Sensors dient, und die Stromquelle ebenfalls zu einer Baueinheit zusammengefaßt, die auf die Spitze der Angelrute aufsteckbar ist.

Die Fassung des Lämpchens ist dabei so angeordnet, daß sie auf dem einen Pol einer als Stromquelle dienenden Batterie ständig aufliegt. Sie besitzt einen Außendurchmesser, der kleiner ist als der Innendurchmesser einer die Batterie, die Fassung und das Lämpchen gehäuseartig umgebenden Hülse aus elektrisch leitendem Material, die mit dem anderen Pol der Batterie in ständig leitender Verbindung steht. Aufgrund der durch das Anbeißen eines Fisches ausgelösten Schwingungen der Spitze der Angelrute kann das Lämpchen mit seiner Fassung quer zur Längsachse der Hülse hin und her rutschen, so daß eine elektrisch leitende Berührung zwischen dem seitlichen Kontakt der Fassung und der Hülse intermittierend hergestellt bzw. unterbrochen wird, wodurch das Lämpchen zum Blinken gebracht werden soll.

Diese bekannte Vorrichtung weist eine Reihe von Nachteilen auf, von denen ein besonders gravierender darin besteht, daß dann, wenn die durch einen Fisch ausgelösten Schwingungen der Spitze der Angelrute sehr kurz und ruckartig sind, das Schließen bzw. Öffnen des Kontaktes zwischen der Lämpchenfassung und der sie umgebenden Hülse so kurz sein kann, daß es schwierig wird, eine Änderung des Leuchtzustandes des Lämpchens zu erkennen. Dies wird durch die Trägheit, mit der ein Glühlämpchen auf das Ein- bzw. Ausschalten des Versorgungsstroms reagiert, noch verstärkt.

In der GB 2259434 wird eine Anordnung mit einem dynamischen Mikrophon beschrieben, dessen Empfindlichkeitsbereich durch eine nachgeordnete elektronische Schaltung auf einen bestimmten Frequenzbereich eingeschränkt wird, in welchem die Resonanzfrequenz der Angelleine liegen soll. Bei dieser Anordnung, die außerordentlich komplex und kostenaufwendig ist, wird davon ausgegangen, daß Fische am Köder so zupfen oder anbeissen, daß in der Angelleine ein der Eigenfrequenz der Anordnung entsprechender Surrton entsteht, der mechanisch durch eine in einem Hohlraum beweglich angeordneten Kugel verstärkt wird, die mit der gleichen Frequenz wie die Angelleine schwingen soll. Eine solche Resonanz dürfte sich aber nur in Sonderfällen der ergeben.

In der französischen Patentschrift 2472916 dient ein Piezoquarz als Sensor, dessen einzelne, äußerst schwache Spannungssignale so lange integriert, daß heißt über einen längeren Zeitraum hinweg aufaddiert werden, bis die Gesamtspannung eine vorgegebene Schwelle überschreitet. Erst dann werden ein Summer und/oder eine Leuchtanzeige ausgelöst.

Beide bekannte Anordnungen sind nicht in der Lage, ein einmaliges kurzes Zupfen eines Fisches an einem an einer Angelleine befestigten Köder wahrzunehmen, da ein solches kurzes Zupfen die Angelleine im Regelfall nicht zum Surren bringt bzw. das einzelne, durch ein solches Zupfen erzeugte, äußerst schwache Signal des Piezoquarzes nicht ausreicht, um eine vorgegebene Schwelle zu überschreiten.

Demgegenüber liegt der Erfindung die Aufgabe zugrunde, einen Bißanzeiger der eingangs genannten Art zu schaffen, bei dem insbesondere eine bessere Erkennbarkeit der Bißanzeige gewährleistet ist.

Zur Lösung dieser Aufgabe sieht die Erfindung die im Anspruch 1 zusammengefaßten Merkmale vor.

Durch diese erfindungsgemäßen Maßnahmen wird einerseits das Prinzip beibehalten, als Sensor einen beweglich gelagerten Körper zu verwenden, der nicht auf einen gleichmäßigen Zug an der Angelleine sondern nur auf Schwingungen der Spitze der Angelrute reagiert. Andererseits wird jedoch gleichzeitig die Erkennbarkeit der durch die Bewegungen dieses Sensors ausgelösten Signale dadurch erheblich verbessert, daß die einzelnen durch das Schließen des elektrischen Kontaktes wenn keine durch das Anbeißen eines Fisches ausgelösten Schwingungen auftreten, leuchtet oder nicht. Um hier definierte Verhältnissen zu schaffen, ist vorzugsweise vorgesehen, daß der Sensor aus einem Röhrchen mit elektrisch leitender Innenwand und einer in diesem Röhrchen schwingend aufgehängten Kugel aus elektrisch leitendem Material besteht, die in der Ruhelage von der Innenwand des Röhrchens elektrisch getrennt ist und dann, wenn sie aufgrund von Schwingungen der Angelrutenspitze diese Innenwand berührt, mit dieser in elektrisch leitenden Kontakt kommt.

Vorzugsweise erfolgt die Aufhängung der Kugel derart, daß das Röhrchen an seinem einen Ende durch einen Körper aus elektrisch nicht leitendem Material verschlossen ist, in dem das eine Ende eines Federdrahtes so befestigt ist, daß sich dieser Federdraht, der an seinem freien Ende die Kugel aus elektrisch leitendem Material trägt, koaxial zum Röhrchen in dessen Inneres hinein erstreckt.

Gemäß einer besonders bevorzugten Ausführungsform sind sowohl der Sensor im Bereich der Spitze als auch die übrigen Teile des Bißanzeigers im Griffbereich im Inneren der Angelrute angeordnet, so daß der gesamte Bißanzeiger in die Angelrute integriert ist.

Diese und weitere vorteilhafte Ausgestaltungen des erfindungsgemäßen Bißanzeigers sind in den Unteransprüchen niedergelegt.

Die Erfindung wird im folgenden anhand eines Ausführungsbeispiels unter Bezugnahme auf die Zeichnung beschrieben; in dieser zeigen:
- Fig.1: in schematischer Weise eine Angelrute mit einem erfindungsgemäßen Bißanzeiger,
- Fig.2: in vergrößerten Maßstab den Sensor des Bißanzeigers aus Fig.1 und
- Fig. 3: die erfindungsgemäße elektronische Schaltungsanordnung.

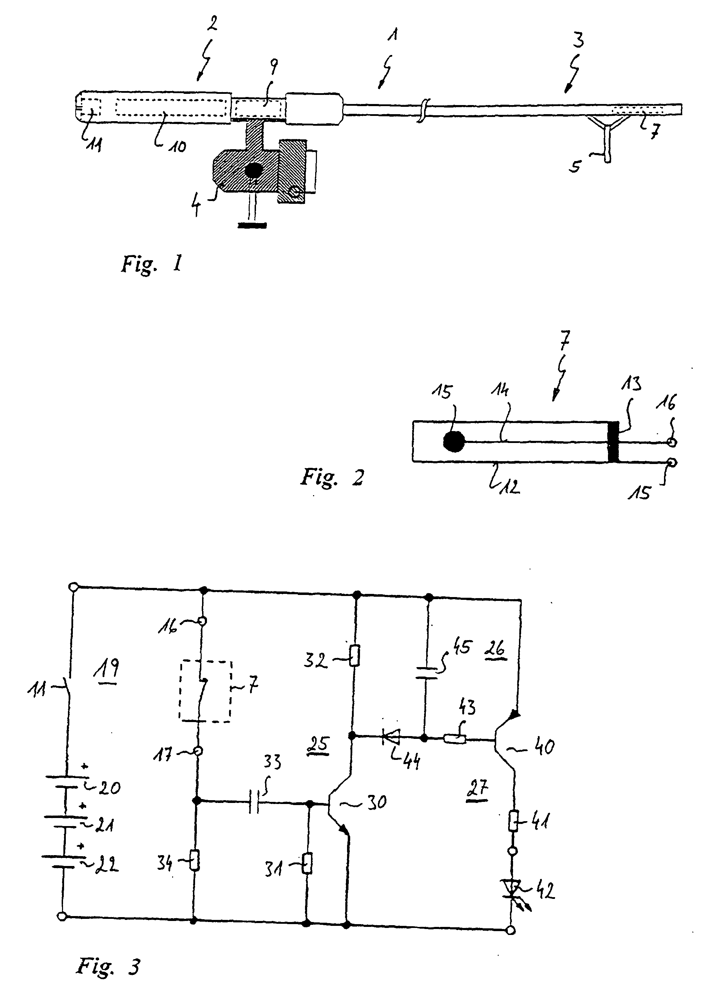

In Fig.1 ist eine Angelrute 1 dargestellt, die einen Griffbereich 2 und einen Spitzenbereich 3 aufweist. Im Griffbereich 2 ist eine übliche Haspel 4 zum Auf- bzw. Abwikkeln der nicht dargestellten Angelleine angebracht. Von den Laufringen, die die Angelleine führen, ist nur der letzte Laufring 5 im Bereich der Angelrutenspitze 3 dargestellt.

Wie man der Fig.1 entnimmt, ist im Bereich der Angelrutenspitze 3 weiterhin ein nur durch ein gestricheltes Rechteck angedeuteter Sensor 7 im Inneren der Angelrute 1 untergebracht, der weiter unten unter Bezugnahme auf Fig.2 noch genauer erläutert wird.

Im Griffbereich 2 sind im Inneren der Angelrute 1 eine Anzeigeeinheit 9, Batterien 10 und ein Schalter 11 untergebracht, mit dessen Hilfe der Bißanzeiger ein- bzw. ausgeschaltet werden kann. Der Sensor 7, die Anzeigeeinheit 9, die Batterien 10 und der Schalter 11 sind durch nicht dargestellte, vorzugsweise im Inneren der Angelrute geführte elektrische Leitungen in geeigneter Weise miteinander verbunden.

Wie man insbesondere der Fig.2 entnimmt, umfaßt der Sensor 7 ein langgestrecktes, zylindrisches Röhrchen 12 aus einem elektrisch leitenden Material, das an seinem einen Stimende durch einen Pfropfen 13 aus elektrisch nicht leitendem Material verschlossenen ist. Dieser Pfropfen 13 trägt einen Federdraht 14, der sich koaxial zum Röhrchen 12 in dessen Inneren in Längsrichtung erstreckt und an dessen freiem Ende eine Kugel 15 aus einem elektrisch leitenden Material befestigt ist, so daß eine elektrisch leitende Verbindung zwischen der Kugel 15 und dem durch den Pfropfen 13 herausgeführten Anschlußkontakt 16 besteht. Das Röhrchen 12 ist seinerseits mit einem Anschlußkontakt 17 versehen.

Solange sich die Angelrute 1 in Ruhe befindet, wird die Kugel 15 vom Federdraht 14 unabhängig von der Lage der Spitze der Angelrute so gehalten, daß sie die Innenwand des Röhrchen 12 nicht berührt. Nur dann, wenn die Spitze der Angelrute 1 in Schwingungen versetzt wird, wie sie beim Zupfen oder Anbeißen eines Fisches an einem mit der Angel ausgeworfenen Köder auftreten, schwingt die Kugel 15 so stark aus, daß sie die Innenwand des Röhrchens 12 berührt und dabei kurzzeitig einoder mehrmals eine elektrisch leitende Verbindung zwischen den Anschlußkontakten 16,17 herstellt.

Wie diese elektrisch leitenden Verbindungen zwischen den Anschlußkontakten 16, 17 zu einem Ansprechen der Anzeigeeinheit führen, ergibt sich aus dem in Fig.3 dargestellten Schaltungsdiagramm. Die dort gezeigte elektronische Schaltungsanordnung wird von drei hintereinander geschalteten Batterien 20,21,22 mit Strom versorgt, die mit dem Ein/Aus-Schalter 11 in Reihe liegen.

ist dieser Schalter 11 geschossen, so liegt an einer ersten Verstärkerstufe 25, einem Zeitglied 26 und einem Endverstärker 27 eine Versorgungsspannung von beispielsweise 4,5 Volt an.

Die erste Verstärkerstufe 25 besteht aus einem Transistor 30, dessen Emitter direkt und dessen Basis über einen Widerstand 31 auf Minus- beziehungsweise Massepotential gelegt sind, während der Kollektor über einen Widerstand 32 mit dem Pluspotential verbunden ist. Der den Verstärkereingang bildende Basisanschluß des Transistors 30 ist über einen Kondensator 33 mit dem Mittelpunkt einer zwischen Masse und Pluspotential gelegten Reihenschaltung verbunden, die aus einem Widerstand 34 und dem einen schwingungsempfindlichen Schalter bildenden Sensor 7 besteht. Solange der Schalter des Sensors 7 geöffnet ist, liegt der Eingang der ersten Verstärkerstufe 25 auf Masse, so daß der Transistor 30 sperrt und der mit dem Kollektoranschluß des Transistors 30 verbundene Eingang des Zeitgliedes 26 und der Eingang der zweiten Verstärkerstufe 27 auf Pluspotential liegen.

Diese zweite Verstärkerstufe 27 wird von einem Transistor 40 gebildet, dessen Emitter mit dem Pluspotential verbunden ist, und dessen Kollektor über einen Widerstand 41 eine mit Massepotential verbundene Leuchtdiode 42 ansteuert, die als Anzeigeeinheit dient. Solange der Basisanschluß des Transistors 40, der über einen Widerstand 43 und eine damit in Reihe geschaltete Diode 44 mit dem Kollektoranschluß des Transistors 30 verbunden ist, auf Pluspotential liegt, weil der Transistor 30 sperrt, sperrt auch der Transistor 40 und die Leuchtdiode 42 leuchtet nicht.

Das Zeitglied 26 wird von dem bereits erwähnten Widerstand 43 und einem Kondensator 45 gebildet, dessen einer Anschluß mit dem Verbindungspunkt zwischen dem Widerstand 43 und der Diode 44 verbunden und dessen anderer Anschluß an das Pluspotential gelegt ist.

Jedesmal dann, wenn sich der vom Sensor 7 gebildete Schalter schießt, wird der Basisanschluß des Transistors 30 für kurze Zeit auf Pluspotential gezogen. Der Transistor 30 steuert solange durch, bis der Kondensator 33 wieder das Minuspotential erreicht hat. Bei diesem Durchsteuern des Transistors 30 erscheint am Ausgang der ersten Verstärkerstufe 25 das Minuspotential, das über die Diode 44 an den Kondensator 45 und den Eingang der zweiten Verstärkerstufe 27 angelegt wird. Der Kondensator 45 lädt sich auf und der Transistor 40 wird sofort durchgesteuert. Wenn sich der Schalter des Sensors 7 bereits nach kurzer Zeit, das heißt unter Umständen bereits nach einigen Millisekunden wieder öffnet, bleibt der Transistor 40 durch die Restladung auf dem Kondensator 45 jedoch weiter durchgesteuert, bis diese Restladung abgebaut ist. Solange der Transistor 40 durchgesteuert ist, leuchtet die Leuchtdiode 42, beziehungsweise summt ein optional zu ihr parallel geschalteter Piezosummer (nicht dargestellt).

Aus dieser Beschreibung ergibt sich, daß das Zeitglied 26 die u.U. äußerst kurzen Impulse, die aufgrund entsprechender kurzer Schließvorgänge im Sensor 7 von der ersten Verstärkerstufe 25 erzeugt werden, so verlängert, daß das erzeugte Licht- bzw. Tonsignal deutlich erkannt werden kann. Die Länge dieses Ausgangssignals kann durch eine entsprechende Wahl der Kapazitäts- bzw. Widerstandswerte des Kondensators 45 und des Widerstandes 43 innerhalb weiter Grenzen festgelegt werden, und liegt vorzugsweise in einem Bereich zwischen einer und fünf Sekunden.

Das beschriebene Zeitglied 26 ist nachtriggerbar, d.h. daß jeder weitere Ausgangsimpuls der Verstärkerstufe 25, der auftritt, solange der Kondensator 45 noch nicht entladen ist, diesen erneut auflädt, so daß längere Anzeigesignale erzeugt werden, als dies durch die durch die Größe des Kondensators 45 und des Widerstandes 43 definierte Zeitkonstante vorgegeben ist. Tritt also eine entsprechend große Anzahl von Schließvorgängen des Sensors 7 in kurzen zeitlichen Abständen nacheinander auf, so kann sich das von der Leuchtdiode 42 abgegebene Ausgangssignal auch auf 10 oder 15 Sekunden oder mehr verlängern, obwohl die Zeitkonstante des Zeitgliedes 26 beispielsweise nur drei oder vier Sekunden beträgt.

Alternativ hierzu ist es möglich, ein nicht nachtriggerbares Zeitglied vorzusehen, das unabhängig davon, ob während des Durchschaltens der zweiten Verstärkerstufe 26 weitere Schließvorgänge auftreten oder nicht, Ausgangssignale mit vorgegebener Länge erzeugt, die der Zeitkonstanten des Zeitgliedes genau entspricht.

## Patentansprüche

1. Elektrischer Bißanzeiger für eine Angelrute (1), der einen Sensor (7), eine Anzeigeeinrichtung (42) und eine Stromquelle (20, 21, 22) aufweist, wobei der Sensor (7) einen an der Spitze (3) der Angelrute (1) angebrachten, beweglich gelagerten Körper (15) umfaßt, der beim Auftreten von Schwingungen, wie sie durch das Anbeißen oder Zupfen eines Fisches an dem mit der Angelrute (1) ausgeworfenen Köder entstehen, einen elektrischen Kontakt intermittierend schließt und dadurch die Anzeigeeinrichtung (42) zum Ansprechen bringt,
**dadurch gekennzeichnet,**
**daß** der Bißanzeiger weiterhin eine elektronische Schaltungsanordnung (19) umfaßt, die folgende Bestandteile aufweist:
eine Verstärkerstufe (25), welche die durch das Schließen des elektrischen Kontaktes erzeugten kurzen Impulse verstärkt, und
ein triggerbares Zeitglied (26), das die so verstärkten, kurzen Impulse verlängert,
sodaß die kurzen elektrischen Impulse, die beim intermittierenden Schließen des elektrischen Kontaktes durch den schwingend gelagerten Körper (15) erzeugt werden, in länger dauernde Impulse umgewandelt werden, welche die Anzeigeeinrichtung (42) zur Abgabe von deutlich wahrnehmbaren Signalen ansteuern.

2. Elektrischer Bißanzeiger nach Anspruch 1, **dadurch gekennzeichnet, daß** die Anzeigeeinrichtung (42), die Stromquelle (20, 21, 22) und die elektronische Schaltungsanordnung (19) vom Sensor (7) getrennt im Griffbereich (2) der Angelrute (1) angebracht und mit dem Sensor (7) durch eine elektrische Leitungen verbunden sind.

3. Elektrischer Bißanzeiger nach Anspruch 1 oder 2, **dadurch gekennzeichnet, daß** der Sensor (7) aus einem Röhrchen (12) mit elektrisch leitender Innenwand und einer in diesem Röhrchen (12) schwingend aufgehängten Kugel (15) aus elektrisch leitendem Material besteht, die in der Ruhelage von der Innenwand des Röhrchens (12) elektrisch getrennt ist und bei deren Berührung den elektrischen Kontakt schließt.

4. Elektrischer Bißanzeiger nach Anspruch 3, **dadurch gekennzeichnet, daß** das Röhrchen (12) an seinem einen Ende durch einen Körper (13) aus elektrisch nicht leitendem Material verschlossen ist, in dem das eine Ende eines Federdrahtes (14) so befestigt ist, daß sich dieser Federdraht (14), der an seinem freien Ende die Kugel (15) aus elektrisch leitendem Material trägt, koaxial zum Röhrchen (12) in dessen Inneres hinein erstreckt.

5. Elektrischer Bißanzejger nach Anspruch 3 oder 4, **dadurch gekennzeichnet, daß** das Röhrchen (12) im Inneren der Angelrute (1) angeordnet ist

6. Elektrischer Bißanzeiger nach einem der vorhergehenden Ansprüche, **dadurch gekennzeichnet, daß** die Anzeigeeinrichtung (42), die Stromquelle (20, 21, 22) und die elektronische Schaltungsanordnung (19) im Inneren der Angelrute (1) untergebracht sind.

7. Elektrischer Bißanzeiger nach einem der vorhergehenden Ansprüche, **dadurch gekennzeichnet, daß** die Anzeigeeinrichtung (42) eine Leuchtdiode umfaßt, die durch jeden der länger dauernden Impulse zum Aufleuchten gebracht wird.

8. Elektrischer Bißanzeiger nach einem der vorhergehenden Ansprüche, **dadurch gekennzeichnet, daß** die Anzeigeeinrichtung (42) einen Piezosummer umfaßt, der durch jeden der länger dauernden Impulse zum Summen gebracht wird.

9. Elektrischer Bißanzeiger nach einem der vorhergehenden Ansprüche, **dadurch gekennzeichnet, daß** das triggerbare Zeitglied (26) nachtriggerbar ist.

## Claims

1. An electrical bite indicator for a fishing rod (1), which has a sensor (7), an indicator device (42) and a power source (20, 21, 22), wherein the sensor (7) includes a movably supported body (15) mounted at the tip (3) of the fishing rod (1) and which, upon the occurrence of oscillations as occur by a fish taking or biting on the bait cast with the fishing rod (1), intermittently closes an electrical contact and thereby causes the indicator device (42) to respond, **characterised in that**
the bite indicator further has an electronic circuit arrangement (19) which has the following components:
an amplifier stage (25) which amplifies the short pulses produced by closure of the electrical contact, and
a triggerable time member (26) which prolongs the short pulses amplified **in that** way,
so that the short electrical pulses which are produced upon intermittent closure of the electrical contact by the oscillatingly mounted body (15) are converted into longer-duration pulses which actuate the indicator device (42) to deliver clearly perceptible signals.

2. An electrical bite indicator according to claim 1 **characterised in that** the indicator device (42), the power source (20, 21, 22) and the electronic circuit arrangement (19) are arranged separately from the sensor (7) in the handle region (2) of the fishing rod (1) and are connected to the sensor (7) by an electrical line,

3. An electrical bite indicator according to claim 1 or claim 2 **characterised in that** the sensor (7) comprises a tube portion (12) with an electrically conductive inner wall and a ball (15) of electrically conductive material which is suspended oscillatingly in said tube portion (12) and which in the rest position is electrically separated from the inner wall of the tube portion (12) and upon touching same closes the electrical contact.

4. An electrical bite indicator according to claim 3 **characterised in that** at its one end the tube portion (12) is closed by a body (13) of electrically non-conductive material in which the one end of a spring wire (14) is so fixed that the spring wire (14) which at its free end carries the ball (15) of electrically conductive material extends into the interior of the tube portion (12) in coaxial relationship therewith.

5. An electrical bite indicator according to claim 3 or claim 4 **characterised in that** the tube portion (12) is arranged in the interior of the fishing rod (1).

6. An electrical bite indicator according to one of the preceding claims **characterised in that** the indicator device (42), the power source (20, 21, 22) and the electronic circuit arrangement (19) are disposed in the interior of the fishing rod (1).

7. An electrical bite indicator according to one of the preceding claims **characterised in that** the indicator device (42) includes a light emitting diode which is caused to light up by each of the longer-duration pulses.

8. An electrical bite indicator according to one of the preceding claims **characterised in that** the indicator device (42) includes a piezoelectric buzzer which is caused to buzz by each of the longer-duration pulses.

9. An electrical bite indicator according to one of the preceding claims **characterised in that** the triggerable time member (26) is retriggerable.

## Revendications

1. Indicateur électrique de morsure pour une canne à pêche (1), qui comporte un capteur (7), un dispositif d'indication (42) et une source de courant (20, 21, 22), le capteur (7) comportant un corps (15) disposé de manière mobile sur l'extrémité (3) de la canne à pêche (1), ledit corps fermant de manière intermittente un contact électrique en cas d'oscillations, telles que celles produites lorsqu'un poisson mord ou tire sur un appât relié à la canne à pêche (1), ladite fermeture intermittente du contact électrique amenant le dispositif d'indication (42) à réagir, **caractérisé en ce que** l'indicateur de morsure comprend en outre un circuit électronique (19) qui comprend les éléments constitutifs suivants :
un étage d'amplification (25), qui amplifie les impulsions courtes produites par la fermeture du contact électrique, et
un relais temporisateur déclenchable (26), qui rallonge les impulsions courtes amplifiées,
de sorte que les impulsions électriques courtes, qui sont produites lors de la fermeture intermittente du contact électrique par le corps disposé de manière oscillante (15), sont transformées en impulsions plus longues, qui commandent le dispositif d'indication (42) pour délivrer des signaux clairement perceptibles.

2. Indicateur électrique de morsure selon la revendication 1, **caractérisé en ce que** le dispositif d'indication (42), la source de courant (20, 21, 22) et le circuit électronique (19) sont disposés dans la zone de préhension (2) de la canne à pêche (1), en étant séparés du capteur (7), et sont reliés au capteur (7) par une liaison électrique.

3. Indicateur électrique de morsure selon la revendication 1 ou 2, **caractérisé en ce que** le capteur (7) est constitué d'un petit tube (12) comportant une paroi interne électriquement conductrice, et d'une bille (15) en matériau électriquement conducteur suspendue de manière oscillante à l'intérieur dudit petit tube (12), ladite bille étant séparée électriquement en position de repos de la paroi intérieure du petit tube (12) et fermant le contact électrique lorsqu'elle touche ladite paroi intérieure.

4. Indicateur électrique de morsure selon la revendication 3, **caractérisé en ce que** le petit tube (12) est obturé d'un côté par un corps (13) en matériau électriquement non-conducteur, une extrémité d'un fil d'acier à ressort étant fixée dans ledit corps (13) de telle sorte que ledit fil d'acier de ressort (14), qui supporte à son extrémité libre la bille (15) en matériau électriquement conducteur, s'étend coaxialement vers l'intérieur dudit petit tube (12).

5. Indicateur électrique de morsure selon la revendication 3 ou 4, **caractérisé en ce que** le petit tube (12) est disposé à l'intérieur de la canne à pêche (1).

6. Indicateur électrique de morsure selon l'une quelconque des revendications précédentes, **caractérisé en ce que** le dispositif d'indication (42), la source de courant (20, 21, 22) et le circuit électronique (19) sont disposés à l'intérieur de la canne à pêche (1).

7. Indicateur électrique de morsure selon l'une quelconque des revendications précédentes, **caractérisé en ce que** le dispositif d'indication (42) comprend une diode lumineuse, qui s'allume par chacune des impulsions plus longues.

8. Indicateur électrique de morsure selon l'une quelconque des revendications précédentes, **caractérisé en ce que** le dispositif d'indication (42) comprend un vibreur sonore piézo, qui est amené à vibrer par chacune desdites impulsions plus longues.

9. Indicateur électrique de morsure selon l'une quelconque des revendications précédentes, **caractérisé en ce que** le relais temporisateur déclenchable (26) est redéclenchable.
